(19) Europäisches Patentamt
European Patent Office
Office européen des brevets

(11) Veröffentlichungsnummer: **0 314 618 B1**

# (12) EUROPÄISCHE PATENTSCHRIFT

(45) Veröffentlichungstag der Patentschrift: **13.04.94**

(51) Int. Cl.$^5$: **C07F 15/02**

(21) Anmeldenummer: **88810710.9**

(22) Anmeldetag: **18.10.88**

## (54) Verbessertes Verfahren zur Herstellung von metallorganischen Verbindungen.

(30) Priorität: **26.10.87 CH 4203/87**

(43) Veröffentlichungstag der Anmeldung:
**03.05.89 Patentblatt 89/18**

(45) Bekanntmachung des Hinweises auf die Patenterteilung:
**13.04.94 Patentblatt 94/15**

(84) Benannte Vertragsstaaten:
**BE CH DE FR GB IT LI NL**

(56) Entgegenhaltungen:

**CHEMICAL ABSTRACTS, Band 84, Nr. 1, 1. Mai 1976, Seite 437, Zusammenfassung Nr. 5119q, Columbus, Ohio, US; A.N. NESMEYANOV et al.: "Catalysts and promoting additives in ligand exchange in ferrocane", && KOORD. KHIM. 1975, 1(9), 1252-6**

**JOURNAL OF ORGANOMETALLIC CHEMISTRY, Band 302, Nr. 3, 25. März 1986, Seiten 307-341, Elsevier Sequoia S.A., Lausanne, CH; R.G. SUTHERLAND et al.: "eta6-Arene-eta5-cyclopentadienyl iron cations and related systems"**

(73) Patentinhaber: **CIBA-GEIGY AG**
**Klybeckstrasse 141**
**CH-4002 Basel(CH)**

(72) Erfinder: **Desobry, Vincent, Dr.**
**Route du Confin 50**
**CH-1723 Marly(CH)**
Erfinder: **Doggweiler, Hans Oskar, Dr.**
**Rigiweg 4**
**CH-4313 Möhlin(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 314 618 B1

Rank Xerox (UK) Business Services
(3.10/3.09/3.3.3)

## Beschreibung

Die vorliegende Erfindung betrifft ein verbessertes Verfahren zur Herstellung von metallorganischen Verbindungen, insbesondere von Eisen-Aren Komplexen, durch Ligandenaustauschreaktion an Ferrocen-(derivaten). Eisen-Aren Komplexe und deren Verwendung als Photoinitiatoren für kationisch polymerisierbare Materialien sind bekannt und beispielsweise in der EP-A 94,915 beschrieben. In der Regel stellt man die Verbindungen durch Ligandenaustauschreaktionen aus Metallocenverbindungen her. Dazu wird die Metallocenverbindung, beispielsweise Ferrocen, in Gegenwart einer Lewis-Säure und Al-Metall mit einer aromatischen Verbindung umgesetzt.

Die Herstellung von Cyclopentadien-Eisen-Aren Verbindungen wird beispielsweise in Chemiker Zeitung 108 (7/8), 239 (1984) und 108 (11), 345 (1984) beschrieben. Weitere Beispiele für diese Reaktionen findet man in Koord. Khim., 1, 1252 (1975). Als Lewis-Säuren werden dabei u.a. Al-Halogenide, $ZrCl_4$ und $HfCl_4$ verwendet.

Es wurde jetzt gefunden, dass man hohe Ausbeuten an Eisen-Aren-Komplexsalz erhält, wenn man ein Gemisch von Al-Trihalogenid mit Zr-IV-Tetrahalogenid oder mit Hf-IV-Tetrahalogenid als Lewis Säure einsetzt oder wenn man eine Kombination dieser Zr-IV- oder Hf-IV-Verbindungen mit einem metallischen Reduktionsmittel verwendet.

Ferner ist es in manchen Fällen möglich, durch eine sorgfältige Auswahl der Mengen von Reaktanden zwei wertvolle metallorganische Verbindungen gleichzeitig zu erhalten.

Dabei nutzt man die Eigenschaft des Zr-IV- oder des Hf-IV-Halogenids als Akzeptor für das ausgetauschte Cyclopentadien(derivat) aus und erhält in den besagten Fällen ein isolierbares Reaktionsprodukt. Bei der Durchführung des Ligandenaustausches mit $AlCl_3$ bilden sich aus den abgehenden Cyclopentadien-(derivaten) in der Regel polymere Produkte (vergl. D. Astruc et al. in Tetrahedron, 32, 245-249 (1976)).

Die vorliegende Erfindung betrifft ein Verfahren zur Herstellung von Verbindungen der Formel I

$$\left[ R\ Fe\ R^2 \right]_q^{\oplus} X^{q\ominus} \qquad (I),$$

worin R ein Anion der Formel $C_5H_4R^1$ oder $C_9H_7$ ist, $R^1$ Wasserstoff, $C_1$-$C_6$-Alkyl oder Halogen ist, $R^2$ ein $\pi$-Aren bedeutet, X ein q-wertiges Anion ist und q 1, 2 oder 3 bedeutet, durch Umsetzung eines Ferrocen(derivat)s $(C_5H_4R^3)Fe(C_5H_4R^1)$ oder $(C_9H_7)_2Fe$, worin $R^3$ eine der Bedeutungen von $R^1$ besitzt, mit mindestens einem Mol eines $\pi$-Arens $R^2$ gegebenenfalls gefolgt vom Austausch des Anions $X^{q\ominus}$ in an sich bekannter Weise, wobei die Umsetzung des Ferrocen(derivat)s in Gegenwart von

a) mindestens 1.2 Mol eines Gemisches aus Al-Trihalogenid und Zr-IV-oder Hf-IV-Tetrahalogenid gegebenenfalls in Gegenwart eines metallischen Reduktionsmittels vorgenommen wird, wobei mindestens 0,2 Mol Zr-IV- oder Hf-IV-Tetrahalogenid und mindestens 0.1 Mol Al-Trihalogenid anwesend sind, oder wobei die Umsetzung des Ferrocen(derivat)s in Gegenwart von

b) mindestens 1.0 Mol eines Zr-IV- oder Hf-IV-Tetrahalogenids als alleiniger Lewis Säure in Kombination mit mindestens 1,0 Mol eines metallischen Reduktionsmittels vorgenommen wird,

wobei sich die Mengenangaben jeweils auf ein Mol eines Ferrocen(derivat)s beziehen.

Der Index q ist vorzugsweise 1 oder 2, besonders bevorzugt 1. R ist ein Indenylanion $C_9H_7$ oder bevorzugt ein Cyclopentadienylanion $C_5H_4R^1$.

$R^1$ und $R^3$ sind als $C_1$-$C_6$-Alkyl geradkettig oder verzweigt, bevorzugt geradkettig.
Beispiele für Reste dieses Typs sind Methyl, Ethyl, n-Propyl, Isopropyl, n-Butyl, n-Pentyl oder n-Hexyl. Bevorzugt wird Methyl.

$R^1$ und $R^3$ sind als Halogen, Fluor, Chlor, Brom oder Iod. Bevorzugt wird Chlor.

$R^1$ und $R^3$ sind vorzugsweise Wasserstoff oder Methyl, ganz besonders bevorzugt Wasserstoff.

Als $\pi$-Arene $R^2$ kommen insbesondere aromatische Kohlenwasserstoffe mit 6 bis 24 Kohlenstoffatomen oder heterocyclisch-aromatische Kohlenwasserstoffe mit 3 bis 30 Kohlenstoffatomen und ein- bis zwei Heteroatomen in Betracht, wobei diese Gruppen gegebenenfalls durch gleiche oder verschiedene einwertige Reste wie Halogenatome, vorzugsweise Chlor- oder Bromatome, oder $C_1$-$C_8$-Alkyl-, $C_1$-$C_8$-Alkoxy-, Cyan-, $C_1$-$C_8$-Alkylthio-, $C_2$-$C_6$-Carbonsäurealkylester- oder Phenylgruppen einfach oder mehrfach substituiert sein können. Diese $\pi$-Arengruppen können einkernige, kondensierte mehrkernige oder unkondensierte mehrkernige Systeme darstellen, wobei in den zuletzt genannten Systemen die Kerne direkt oder über Brückenglieder, beispielsweise über $-CH_2-$, -CO-, -O-, -S- oder $-SO_2-$, verknüpft sein können.

Als heteroaromatische $\pi$-Arene eignen sich vorzugsweise ein oder zwei S-und/oder O-Atome enthaltende Systeme.

Beispiele für geeignete $\pi$-Arene sind Benzol, Toluol, Xylole, Ethylbenzol, Cumol, Methoxybenzol, Ethoxybenzol, Dimethoxybenzol, p-Chlortoluol, m-Chlortoluol, Chlorbenzol, Brombenzol, Dichlorbenzol, Diisopropylbenzol, Trimethylbenzol, Naphthalin, 1,2-Dihydronaphthalin, 1,2,3,4-Tetrahydronaphthalin,Methylnaphthalin, Methoxynaphthalin, Ethoxynaphthalin, Chlornaphthalin, Bromnaphthalin, Dimethylnaphthalin, Biphenyl, Stilben, Inden, 4,4'-Dimethylbiphenyl, Fluoren, Phenanthren, Anthracen, 9,10-Dihydroanthracen, Triphenyl, Pyren, Perylen, Naphthacen, Coronen, Thiophen, Chromen, Xanthen, Thioxanthen, Benzofuran, Benzothiophen, Naphthothiophen, Thianthren, Diphenylenoxyd und Diphenylensulfid.

X kann ein beliebiges q-wertiges Anion einer anorganischen oder organischen Säure sein. Dabei handelt es sich beispielsweise um Halogenide, also um Fluorid, Chlorid, Bromid und Iodid, oder um Pseudohalogenide, beispielsweise um Cyanid, Cyanat oder Thiocyanat, oder um Anionen weiterer anorganischer Säuren, beispielsweise um Sulfat, Phosphat, Nitrat, Perchlorat oder Tetraphenylborat.

Weitere geeignete Anionen leiten sich von Sulfonsäuren aliphatischer oder aromatischer Verbindungen ab. Bevorzugte Beispiele dafür sind p-Toluolsulfonat, p-Trifluormethylbenzolsulfonat oder Trifluormethansulfonat.

Besonders bevorzugt man nicht nukleophile Anionen $X^{q\ominus}$.

Geeignete nicht nukleophile Anionen $X^{q\ominus}$ sind insbesondere Anionen der Formel II

$[LQ_m]^{q\ominus}$ (II),

worin L ein zwei- bis siebenwertiges Metall oder Nichtmetall ist, Q ein Halogenatom, vorzugsweise Fluor, bedeutet oder, für den Fall, dass L Phosphor, Arsen oder Antimon und m 5 ist, zusätzlich OH sein kann, q 1, 2 oder 3 ist und m eine der Wertigkeit von L + q entsprechende ganze Zahl ist.

Beispiele für solche Anionen sind $BF_4^-$, $AlF_4^-$, $AlCl_4^-$, $TiF_6^{2-}$, $PF_6^-$, $SbF_6^-$, $SbCl_6^-$, $SbF_5(OH)^-$, $GeF_6^-$, $ZrF_6^{2-}$, $AsF_6^-$, $FeCl_4^-$, $SnF_6^{2-}$, $SnCl_6^{2-}$ und $BiCl_6^-$. Bevorzugte komplexe Anionen sind $BF_4^-$, und insbesondere $AsF_6^-$, $SbF_6^-$ oder $PF_6^-$.

Zu den weiter oben definierten Al-Trihalogeniden oder Zr-IV- oder Hf-IV-Tetrahalogeniden zählen die entsprechenden Chloride, Bromide oder Iodide. Vorzugsweise verwendet man die Chloride oder die Bromide, insbesondere jedoch die Chloride.

Bevorzugte Zr-IV- oder Hf-IV-Tetrahalogenide sind $ZrBr_4$ oder $HfBr_4$ und insbesondere $ZrCl_4$ oder $HfCl_4$. Bevorzugtes Al-Trihalogenid ist $AlCl_3$, insbesondere sublimiertes $AlCl_3$.

Die bevorzugte Gesamtmenge an Lewis-Säure bei Variante a) beträgt 1,2-4,0 Mol, insbesondere 1,6-2,0 Mol und ganz besonders bevorzugt 1,7-1,9 Mol, bezogen auf ein Mol Ferrocen(derivat).

Die bevorzugte Menge an Zr-IV oder Hf-IV-Tetrahalogenid bei Variante b) beträgt 1,0 - 3,0 Mol, besonders bevorzugt 1,5 - 2,0 Mol, bezogen auf ein Mol Ferrocen(derivat).

Das molare Verhältnis von Zr-IV- oder Hf-IV-Tetrahalogenid zu Al-Trihalogenid bei Variante a) beträgt vorzugsweise 1:4 bis 4:1, insbesondere 1:2 bis 1:3.

Als metallische Reduktionsmittel kommen beispielsweise Magnesium, Zink oder Aluminium in Frage. Besonders bevorzugt wird Aluminium.

Die Ausführungsform, worin ein Zr-IV- oder Hf-IV-Tetrahalogenid/Al-Trihalogenidgemisch enthaltend 0,3-0,7 Mol, bevorzugt 0,4-0,6 Mol, ganz besonders bevorzugt etwa 0,5 Mol, des entsprechenden IV-Halogenids, bezogen auf ein Mol Ferrocen(derivat), in Kombination mit einem metallischen Reduktionsmittel eingesetzt wird, ist besonders bevorzugt, da bei dieser Verfahrensführung neben dem Metallocenderivat der Formel I auch das Produkt der Formel III

$(R)_2M(Hal)_2$ (III)

entsteht, worin R die weiter oben definierte Bedeutung besitzt, vorzugsweise $C_5H_4R^1$ bedeutet, M Zr oder Hf bedeutet und Hal ein Halogenatom ist.

Verbindungen der Formel III. sind wertvolle Zwischenprodukte für organische Synthesen. Ihre Verwendung wird beispielsweise in J. Organomet. Chemistry, 290, C4 -C6 (1985) beschrieben.

Bei der obigen Variante nützt man die Eigenschaft des Zr-IV- bzw. Hf-IV-Halogenids als Cyclopentadienyl-Akzeptor aus. Das aus dem Ferrocen(derivat) ausgetauschte Cyclopentadienyl(derivat) wird also auf das Zr-IV- oder Hf-IV-Halogenid übertragen.

Dabei wählt man zweckmässig ein molares Verhältnis von Al-Trihalogenid und dem entsprechenden IV-Halogenid von 2:1 oder grösser als 2:1.

Ueber die stöchiometrischen Mengen weit hinausgehende Mengen an Zr-IV- oder Hf-IV-Halogenid sind bei dieser Verfahrensvariante zu vermeiden, da sich ansonsten polymere Nebenprodukte bilden können, die zu einer Verringerung der Ausbeute an $(Cpd)_2MHal_2$ [Cpd = Cyclopentadienylanion] führen und die zu Schwierigkeiten bei der Aufarbeitung (Filtration) führen können.

Bevorzugt arbeitet man bei dieser Verfahrensvariante mit einem Gemisch aus 0,3-0,7 Mol Zr-IV- oder Hf-IV-Tetrahalogenid und 0,8-2,0 Mol Al-Trihalogenid, bezogen auf ein Mol Ferrocen(derivat), zusammen mit feinverteiltem Al; dabei bedeutet Halogenid Bromid oder Chlorid.

Besonders bevorzugt arbeitet man bei dieser Verfahrensvariante mit einem Gemisch aus 0,4-0,6 Mol Zr-IV- oder Hf-IV-Tetrahalogenid und 1,0-1,8 Mol Al-Trihalogeniden, zusammen mit 0,1-1,0 Mol feinverteiltem Al, bezogen auf ein Mol Ferrocen(derivat); dabei bedeutet Halogenid Bromid oder Chlorid.

In einer weiteren ganz besonders bevorzugten Ausführungsform des Verfahrens setzt man ein Gemisch aus 0,4-0,6 Mol, vorzugsweise etwa 0.5 Mol. $ZrCl_4$ oder $HfCl_4$ und 1,2-1,4 Mol, vorzugsweise 1,3-1,35 Mol, $AlCl_3$. zusammen mit 0,15-0,2 Mol feinverteiltem Al, bezogen auf ein Mol Ferrocen(derivat), ein.

Bevorzugt setzt man bei dieser Ausführungsform das metallische Reduktionsmittel in einer zum Zr-IV- oder Hf-IV-Tetrahalogenid äquivalenten Menge zu. Im Falle von Al verwendet man also bevorzugt ein Drittel der molaren Menge des Zr-IV- oder Hf-IV-Tetrahalogenids.

Führt man die Variante a) mit einem Ueber- oder einem Unterschuss an Zr-IV- oder Hf-IV-Tetrahalogenid durch, so empfiehlt es sich, zur Steigerung der Ausbeuten ein metallisches Reduktionsmittel zuzusetzen. Dieses kann in beliebigen Mengen eingesetzt werden; es sollten jedoch vorzugsweise mehr als 0,1 Mol, besonders bevorzugt 0,1-1,0 Mol, bezogen auf ein Mol Ferrocen(derivat), eingesetzt werden.

Im Falle der Verfahrensvariante b) muss ein metallisches Reduktionsmittel, vorzugsweise Al-Metall, anwesend sein. In dieser Ausführungsform setzt man bevorzugt 1.0 - 2,0 Mol, insbesondere 1,0 - 1,5 Mol, des Reduktionsmittels ein, wobei die Mengenangaben auf ein Mol Ferrocen(derivat) bezogen sind.

Das Metall sollte in einer Form, die eine grosse Oberfläche bietet, eingesetzt werden. So kann man es beispielsweise als Folie oder in feinverteilter Form zusetzen, vorzugsweise als Pulver oder als Staub.

Das $\pi$-Aren kann in beliebigem Ueberschuss, beispielsweise als Lösungsmittel, eingesetzt werden. Es sollte aber mindestens 1 Mol. bezogen auf ein Mol Ferrocen(derivat), vorgelegt werden. Es können auch Mischungen von $\pi$-Arenen verwendet werden.

Die Reaktion wird gegebenenfalls in einem weiteren Lösungsmittel durchgeführt. Es lassen sich alle Lösungsmittel verwenden, die unter den Reaktionsbedingungen inert sind. Die Basizität dieser Lösungsmittel sollte nicht zu gross sein, um die Lewis-Säure(n) nicht übermässig zu desaktivieren. Beispiele für geeignete Lösungsmittel sind (cyclo)aliphatische oder aromatische Kohlenwasserstoffe, die gegebenenfalls nichtbasische Substituenten tragen können, beispielsweise Halogenatome oder Alkylgruppen. Bevorzugt werden $C_6$-$C_{12}$ Kohlenwasserstoffe. Beispiele für bevorzugte Lösungsmittel dieser Art sind n-Hexan, n-Heptan, n-Octan, n-Nonan, n-Decan, n-Undecan, n-Dodecan oder entsprechende verzweigte Vertreter dieser Typen; man kann auch Gemische von aliphatischen Kohlenwasserstoffen einsetzen, beispielsweise Octanfraktion. Bevorzugtes cycloaliphatisches Lösungsmittel ist Methylcyclohexan. Die aliphatischen Kohlenwasserstoffe können gegebenenfalls chloriert sein. Weitere bevorzugte Lösungsmittel sind Benzol, Toluol, Xylol, Ethylbenzol, Cumol, Chlorbenzol oder Dichlorbenzol.

Vorzugsweise arbeitet man ohne zusätzliches Lösungsmittel und verwendet das $\pi$-Aren $R^2$ in einer Menge von 2,0-10,0 Mol, bezogen auf ein Mol Ferrocen(derivat).

Das Reaktionsgemisch kann gegebenenfalls geringe Mengen an Wasser, beispielsweise 0,1-2 Gew.%, bezogen auf die Menge an Lewis-Säure, enthalten, wie es im Falle der Verwendung von $AlCl_3$ als Lewissäure in Koord. Khim., 1, 1252 (1975) beschrieben ist.

Das Ferrocen(derivat) ist bevorzugt Ferrocen. Man kann aber auch beliebige Derivate einsetzen, die substituierte Cyclopentadienylanionen oder Indenylanionen aufweisen. Beispiele für solche Derivate sind Bis-indenyl-eisen-(II), Chlor- oder Dichlorferrocen oder Methyl- bzw. Dimethylferrocen. Vorzugsweise verwendet man Ferrocen oder die leicht zugänglichen monosubstituierten Ferrocenderivate, insbesondere jedoch Ferrocen.

Die Reaktion wird zweckmässigerweise im Temperaturbereich von 15-250 °C durchgeführt. Bevorzugter Temperaturbereich ist 50-120 °C.

Die Reaktionsdauer beträgt, je nach Temperatur, in der Regel 0,25-24 Stunden. Bevorzugt sind 1-2 Stunden.

Das Verfahren kann an der Luft oder unter Schutzgas durchgeführt werden. Vorteilhafterweise führt man es unter Sauerstoffausschluss durch, beispielsweise unter Stickstoff oder unter Argon.

Sämtliche Edukte können gemeinsam vorgelegt werden und die Reaktion kann gegebenenfalls durch Erwärmen eingeleitet werden. In manchen Fällen kann es sich jedoch als zweckmässig erweisen, einzelne Reaktionspartner während der Reaktion zuzugeben. So kann man beispielsweise $ZrCl_4$ oder $HfCl_4$ während

der Reaktion zugeben, um die Reaktionsgeschwindigkeit und damit auch die Reaktionswärme zu steuern.

Nach Beendigung der Reaktion wird das Reaktionsgemisch in der Regel mit Wasser oder Eis-/Wasser-Gemisch, das gegebenenfalls angesäuert sein kann, desaktiviert. Danach wird das Gemisch in der Regel filtriert, um Al-Metall oder nicht gelöste Reaktionsbestandteile abzutrennen. Unter Umständen wird noch eine Phasentrennung nötig sein. Die erhaltene wässrige Phase wird dann gegebenenfalls mit einem polaren, organischen Lösungsmittel, beispielsweise mit Chloroform oder Dichlormethan, extrahiert, um nichtreagierte Verbindungen oder wertvolle Nebenprodukte zu entfernen. Diese Extraktionsstufe ist dann von besonderem Interesse, wenn die Reaktionsvariante, bei der gleichzeitig $(R)_2M(Hal)_2$ entsteht, gewählt wird. In diesem Falle desaktiviert man im allgemeinen mit angesäuertem Wasser oder Eis-/ Wassergemisch und führt nach der Filtration und Phasentrennung eine die Extraktion mit einem organischen, polaren Lösungsmittel durch.

Die Verbindung der Formel I fällt zunächst in Form des Halogenids an. Dieses wird gegebenenfalls in an sich bekannter Weise isoliert und gereinigt, beispielsweise durch Umkristallisieren, oder man führt andere Anionen in an sich bekannter Weise bei der Aufarbeitung des Reaktionsgemisches ein. So kann man beispielsweise der isolierten wässrigen Phase eine Säure oder ein wasserlösliches Salz besagter Säure zusetzen und die Verbindung der Formel I auf diese Weise ausfällen.

Beispiele für geeignete Fällungsmittel sind die Na- oder K-Salze bzw. die freien Säuren der weiter oben als bevorzugt aufgezählten Anionen.

Man kann diese Anionen auch in an sich bekannter Weise mittels Ionenaustausch einführen.

Die Verbindungen der Formel I mit nicht nukleophilen Anionen lassen sich als Photoinitiatoren für kationisch polymerisierbare Materialien einsetzen. Die Verbindungen der Formel I mit nukeophilen Anionen lassen sich in der oben beschriebenen Weise zur Herstellung dieser Photoinitiatoren verwenden.

Die folgenden Beispiele erläutern die Erfindung:

Beispiel 1: ($\eta^6$-Mesitylen)-($\eta^5$-cyclopentadienyl)-eisen(II)-hexafluorophosphat

Zu einer gerührten Mischung aus 8 g (0,043 Mol) Ferrocen, 10 g (0,043 Mol) Zirkontetrachlorid und 1,2 g (0,043 Mol) Aluminium Pulver in 50 ml (0,43 Mol) Mesitylen werden bei 60 °C unter $N_2$ innerhalb von 30 Min. 10 g (0,043 Mol) Zirkontetrachlorid zugegeben. Nach Erwärmung des Reaktionsgemisches auf 100 °C und Halten der Temperatur während 2 Stunden wird der Ansatz abgekühlt und eine Lösung von 16 ml 32 % HCl in 85 ml Wasser langsam zugetropft.

Nach 15 Min. wird die Mischung über Hyflo (Filtrierhilfe) filtriert die zwei Phasen getrennt und die wässrige Phase zu einer Lösung von 8,7 g (0,047 Mol) $KPF_6$ in 100 ml Wasser zugegeben.

Nach Filtration und Trocknen erhält man 12,1 g des rohen ($\eta^6$-Mesitylen)-($\eta^5$-cyclopentadienyl)-eisen-(II) $PF_6$ (72,9 % der Theorie); Smp. 210-220 °C (Zers.);

Kristallisiert aus Ethanol: 51 % der Theorie; Smp.: 269 °C (Zers.).

Beispiel 2: Man legt eine Mischung aus 8 g Ferrocen (0,043 Mol), 9 g $ZrCl_4$ (0,0386 Mol), 0,6 g $AlCl_3$ - (0,0043 Mol), 50 ml Mesitylen (0,43 Mol) und 1,2 g Al-Pulver (0,043 Mol) bei 60 °C vor (unter $N_2$), und dann werden langsam 10 g (0,043 Mol) $ZrCl_4$ bei 60 °C zugegeben. Das Reaktionsgemisch wird auf 100 °C erwärmt und 2 Stunden bei dieser Temperatur gehalten. Nach gleicher Aufarbeitung wie in Beispiel 1 erhält man 13,6 g rohes ($\eta^6$-Mesitylen)-$\eta^5$-(cyclopentadienyl)-eisen(II) $PF_6$ (81,9 % der Theorie) Smp. 215-230 °C;

Kristallisiert aus Ethanol: 43,5 % der Theorie; Smp. 269 °C (Zers).

Beispiel 3: Man legt eine Mischung aus 8 g Ferrocen (0,043 Mol), 5,7 g $AlCl_3$ (0,043 Mol) und 60 ml Mesitylen (0,5 Mol) bei 60 °C unter $N_2$ vor. Dann werden bei dieser Temperatur innerhalb von 30 Min. 2 g (0,0086 Mol) $ZrCl_4$ zugegeben. Die Mischung wird für 2 Stunden auf 100 °C erhitzt. Das Gemisch wird abgekühlt und eine Mischung aus 60 ml Dichlormethan und 15 ml 32 % HCl Lösung tropfenweise dazugegeben. Dann werden nochmals 200 ml Wasser zugegeben und filtriert. Nach der Phasentrennung wird die wässrige Phase 3mal mit 50 ml Dichlormethan gewaschen und zu einer Lösung von 16,2 g (0,0473 Mol) Natriumtetraphenylborat in 200 ml Wasser gegeben. Filtration und Trocknung liefert 13,9 g (57,6 % der Theorie) rohes Produkt (Smp. 229-237 °C).

Beispiel 4: Man legt eine Mischung aus 8 g aus Toluol kristallisiertem Ferrocen (0,043 Mol), 5,7 g sublimiertes $AlCl_3$ (0,043 Mol) und 60 ml über Natrium destilliertes Mesitylen (0,5 Mol) bei 60 °C unter Argon vor. Dann werden bei dieser Temperatur innerhalb von 60 Min. 2 g (0,0086 Mol) $ZrCl_4$ zugegeben. Die Mischung wird für 2 Stunden auf 100 °C erhitzt. Das Gemisch wird abgekühlt und eine Mischung aus 60 ml Dichlormethan und 15 ml 32 % HCl Lösung tropfenweise dazugegeben. Dann werden nochmals 200 ml Wasser zugegeben und filtriert. Nach der Phasentrennung wird die wässrige Phase 3x mit 80 ml Dichlormethan gewaschen und zu einer Lösung von 16,2 g (0,0473 Mol) Natriumtetraphenylborat in 200 ml Wasser gegeben. Filtration und Trocknung liefern 15,35 g (63,9 % der Theorie) rohes Produkt. Ausfällung aus einer konzentrierten Aceton-Lösung bei Zugabe von Ether liefert 7,65 g (31,85 % der

Theorie) gereinigtes ($\eta^6$-Mesitylen)-($\eta^5$-cyclopentadienyl)-eisen(II)-tetraphenylborat (Smp. 268 °C).

Beispiel 5: Zu einer gerührten Mischung aus 129,7 g (1,265 Mol) Cumol. 27,9 g (0,15 Mol) Ferrocen, 26,6 g (0,199 Mol) Aluminiumchlorid und 0,7 g (0,025 Mol) Aluminiumpulver werden bei 60 °C unter Stickstoff innerhalb von 30 Min. 17,5 g (0,075 Mol) Zirkontetrachlorid zugegeben. Das Reaktionsgemisch wird nach dem Aufheizen 1,5 Stunden bei 110 °C gerührt, auf 25 °C abgekühlt und langsam auf eine -10 °C kalte Mischung aus 200 ml Dichlormethan und 50 ml 32%iger Salzsäure gegossen. Das Gemisch wird dann mit weiteren 200 ml 5%iger Salzsäure unter Stickstoff verdünnt und die beiden Phasen getrennt. Die untere, Zirkonocendichlorid enthaltende, Dichlormethanphase wird am Rotavap eingeengt und der entstehende Feststoff im Hochvakuum getrocknet. Damit erhält man 13 g Zirkonocendichlorid (59,4 % der Theorie, sublimiert 50,5 %, Smp. 195 °C (Zers.)).

| Analyse | | | |
|---|---|---|---|
| Ber. (%) | C 41,09 | H 3,45 | Cl 24,26 |
| Gef. (%) | C 41,19 | H 3,54 | Cl 24,17. |

Die obere, wässrige Phase wird mit 30,4 g (0,165 Mol) Kaliumhexafluorophosphat behandelt und das ausgefallene ($\eta^6$-Cumol)-($\eta^5$-cyclopentadienyl)eisen(II)-$PF_6$ abfiltriert, gewaschen und getrocknet.
Ausbeute: 52,4 g (90,5 % der Theorie; Smp. 80-84 °C).

| Analyse: | | |
|---|---|---|
| Ber. (%) | C 43,35 | H 4,44 |
| Gef. (%) | C 43,38 | H 4,42. |

Beispiel 6: Analog zu Beispiel 5 wird zu einer gerührten Mischung aus 56 g Cumol, 5 g (0,027 Mol) Ferrocen, 4,8 g (0,0358 Mol) Aluminiumchlorid und 0,12 g (0,0045 Mol) Aluminiumpulver unter Stickstoff bei 55 °C innerhalb von 30 Min. 4,3 g (0,0134 Mol) Hafniumtetrachlorid zugegeben. Die Aufarbeitung erfolgt analog zu Beispiel 4. Damit werden 3,5 g Hafnocendichlorid (68,6 % der Theorie; Smp. 228-230 °C) erhalten.
UV-Spektrum in $CHCl_3$: $\lambda_{max}$ ($\epsilon$) 266,4 nm (2,751) 306,3 nm (0,714)

| Analyse | | | |
|---|---|---|---|
| Ber. (%) | C 31,64 | H 2,66 | Cl 18,68 |
| Gef. (%) | C 33,25 | H 2,91 | Cl 18,30 |

Die Ausbeute an ($\eta^6$-Cumol)-($\eta^5$-cyclopentadienyl)-eisen(II)-$PF_6$ beträgt 5,7 g (58 % der Theorie; Smp. 83-85 °).

Beispiel 7: Analog zu Beispiel 4 werden zu einer gerührten Mischung aus 60 ml Mesitylen, 8 g Ferrocen (0,043 Mol) und 5,7 g sublimiertem $AlCl_3$ (0,043 Mol) unter Argon um 60 °C innerhalb von 1 Std. 10 Min. 10 g 0,043 Mol) $ZrCl_4$ zugegeben.
Die Aufarbeitung erfolgt analog zu Beispiel 4.
Damit werden 20,1 g (83,4 % der Theorie) rohes ($\eta^6$-Mesitylen)-$\eta^5$-(cyclopentadienyl)-eisen(II)-tetraphenylborat erhalten.
Ausfällung aus einer konzentrierten Acetonlösung durch Zugabe von Ether liefert 45,0 % gereinigtes Produkt (Smp. 268 °C).

## Patentansprüche

**1.** Verfahren zur Herstellung von Verbindungen der Formel I

$$\left[ R\ Fe\ R^2 \right]_q^{\oplus} X^{q\ominus} \qquad (I),$$

worin R ein Anion der Formel $C_5H_4R^1$ oder $C_9H_7$ ist, $R^1$ Wasserstoff, $C_1$-$C_6$-Alkyl oder Halogen ist, $R^2$ ein $\pi$-Aren bedeutet, X ein q-wertiges Anion ist und q 1, 2 oder 3 bedeutet, durch Umsetzung eines Ferrocen(derivat)s $(C_5H_4R^1)Fe(C_5H_4R^3)$ oder $(C_9H_7)_2Fe$, worin $R^3$ eine der Bedeutungen von $R^1$ besitzt, mit mindestens einem Mol eines $\pi$-Arens $R^2$ gegebenenfalls gefolgt vom Austausch des Anions $X^{q\ominus}$ in an sich bekannter Weise, wobei die Umsetzung des Ferrocen(derivat)s in Gegenwart von

a) mindestens 1,2 Mol eines Gemisches aus Al-Trihalogenid und Zr-IV- oder Hf-IV-Tetrahalogenid gegebenenfalls in Gegenwart eines metallischen Reduktionsmittels vorgenommen wird, wobei mindestens 0,2 Mol Zr-IV- oder Hf-IV-Tetrahalogenid und mindestens 0,1 Mol Al-Trihalogenid anwesend sind, oder wobei die Umsetzung des Ferrocen(derivat)s in Gegenwart von

b) mindestens 1,0 Mol eines Zr-IV- oder Hf-IV-Tetrahalogenids als alleiniger Lewis-Säure in Kombination mit mindestens 1,0 Mol eines metallischen Reduktionsmittels vorgenommen wird,

wobei die Mengenangaben sich jeweils auf ein Mol eines Ferrocen(derivat)s beziehen.

**2.** Verfahren gemäss Anspruch 1, worin R ein Cyclopentadienylanion $C_5H_4R^1$ ist.

**3.** Verfahren gemäss Anspruch 1, worin $R^1$ Wasserstoff ist.

**4.** Verfahren gemäss Anspruch 1, worin das $\pi$-Aren $R^2$ ein aromatischer Kohlenwasserstoff mit 6 bis 24 Kohlenstoffatomen oder ein heterocyclischaromatischer Kohlenwasserstoff mit 3 bis 30 Kohlenstoffatomen und ein bis zwei Heteroatomen ist.

**5.** Verfahren gemäss Anspruch 1, worin $X^{q\ominus}$ ausgewählt wird aus der Gruppe bestehend aus $BF_4^-$, $PF_6^-$, $AsF_6^-$ und $SbF_6^-$.

**6.** Verfahren gemäss Anspruch 1, worin das Zr-IV- oder Hf-IV-Tetrachlorid $ZrCl_4$ oder $HfCl_4$ ist und worin das Al-Trihalogenid $AlCl_3$, insbesondere sublimiertes $AlCl_3$, bedeutet.

**7.** Verfahren gemäss Anspruch 1, worin die Gesamtmenge an Lewis Säure bei Variante a) 1,2-4,0 Mol und bei Variante b) 1,0-3,0 Mol, bezogen auf ein Mol Ferrocen(derivat), beträgt.

**8.** Verfahren gemäss Anspruch 1, worin das molare Verhältnis von Zr-IV- oder Hf-IV-Tetrahalogenid zu Al-Trihalogenid bei Variante a) 1:4 bis 4:1 beträgt.

**9.** Verfahren gemäss Anspruch 1 zur gleichzeitigen Herstellung von Verbindungen der Formel I und der Formel III $(R)_2M(Hal)_2$ (III),

$$\left[ R\ Fe\ R^2 \right]_q^{\oplus} X^{q\ominus} \qquad (I),$$

worin M Zr oder Hf bedeutet, Hal ein Halogenatom ist und R, $R^2$, X und q die in Anspruch 1 definierte Bedeutung besitzen, dadurch gekennzeichnet, dass man ein Zr-IV- oder Hf-IV-Tetrahalogenid/Al-Trihalogenidgemisch enthaltend 0,3-0,7 Mol des entsprechenden IV-Halogenids, bezogen auf ein Mol Ferrocen(derivat), in Kombination mit einem metallischen Reduktionsmittel einsetzt.

**10.** Verfahren gemäss Anspruch 9, worin ein Gemisch aus 0,3-0,7 Mol Zr-IV- oder Hf-IV-Tetrahalogenid und 0,8-2,0 Mol Al-Trihalogenid, bezogen auf ein Mol Ferrocen(derivat), zusammen mit feinverteiltem Al eingesetzt wird und worin Halogenid Bromid oder Chlorid bedeutet.

**11.** Verfahren gemäss Anspruch 9, worin ein Gemisch aus 0,4-0,6 Mol Zr-IV oder Hf-IV-Tetrahalogenid und 1,0-1,8 Mol Al-Trihalogenid, zusammen mit 0,1-1,0 feinverteiltem Al, bezogen auf ein Mol Ferrocen-(derivat), eingesetzt wird und worin Halogenid Bromid oder Chlorid bedeutet.

**12.** Verfahren gemäss Anspruch 9, worin als Lewis-Säure ein Gemisch aus 0,4-0,6 Mol $ZrCl_4$ oder $HfCl_4$ und 1,2-1,4 Mol $AlCl_3$, zusammen mit 0,15-0,2 Mol feinverteiltem Al, bezogen auf ein Mol Ferrocen(derivat), eingesetzt wird.

**13.** Verfahren gemäss Anspruch 9, worin das Reaktionsgemisch nach Beendigung der Reaktion mit angesäuertem Wasser oder Eis-/Wassergemisch desaktiviert wird und nach der Filtration und Phasentrennung die wässrige Phase mit einem organischen, polaren Lösungsmittel extrahiert wird.

**Claims**

**1.** A process for the preparation of a compound of formula I

$$\left[ R\ Fe\ R^2 \right]_q^{\oplus} X^{q\ominus} \quad (I),$$

wherein R is an anion of formula $C_5H_4R^1$ or $C_9H_7$, $R^1$ is hydrogen, $C_1$-$C_6$alkyl or halogen, $R^2$ is a $\pi$-arene, X is an anion of valency q and q is 1, 2 or 3, by reacting a ferrocene or ferrocene derivative $(C_5H_4R^1)Fe(C_5H_4R^3)$ or $(C_9H_7)_2Fe$, in which $R^3$ has one of the meanings of $R^1$, with at least one mole of a $\pi$-arene $R^2$, followed optionally by the replacement of the anion $X^{q\ominus}$ in a manner known per se, the reaction of the ferrocene or ferrocene derivative being carried out in the presence of

a) at least 1.2 mol of a mixture of Al trihalide and Zr(IV) or Hf(IV) tetrahalide, in the presence or absence of a metallic reducing agent, such that at least 0.2 mol of Zr(IV) or Hf(IV) tetrahalide and at least 0.1 mol of Al trihalide are present; or

b) at least 1.0 mol of a Zr(IV) or Hf(IV) tetrahalide as sole Lewis acid in conjunction with at least 1.0 mol of a metallic reducing agent,

the amounts being based in each case on one mole of a ferrocene or ferrocene derivative.

**2.** A process according to claim 1, wherein R is a cyclopentadienyl anion $C_5H_4R^1$.

**3.** A process according to claim 1, wherein $R^1$ is hydrogen.

**4.** A process according to claim 1, wherein the $\pi$-arene $R^2$ is an aromatic hydrocarbon containing 6 to 24 carbon atoms or a heterocyclic-aromatic hydrocarbon containing 3 to 30 carbon atoms and one or two hetero atoms.

**5.** A process according to claim 1, wherein $X^{q\ominus}$ is selected from the group consisting of $BF_4^-$, $PF_6^-$, $AsF_6^-$ and $SbF_6^-$.

**6.** A process according to claim 1, wherein the Zr (IV) or Hf (IV) tetrachloride is $ZrCl_4$ or $HfCl_4$ and the Al trihalide is $AlCl_3$, especially sublimed $AlCl_3$.

**7.** A process according to claim 1, wherein the total amount of Lewis acid in variant a) is 1.2-4.0 mol and, in variant b), is 1.0-3.0 mol, based on one mole of ferrocene or ferrocene derivative.

**8.** A process according to claim 1, wherein the molar ratio of Zr(IV) or Hf (IV) tetrahalide to Al trihalide in variant a) is 1:4 to 4:1.

**9.** A process according to claim 1 for the simultaneous preparation of a compound of formula I and a compound of formula III

$$\left[ R\ Fe\ R^2 \right]_q^{\oplus} X^{q\ominus} \qquad (I),$$

$(R)_2M(Hal)_2$ (III).

wherein M is Zr or Hf, Hal is a halogen atom and R, $R^2$, X and q are as defined in claim 1, which process comprises using a mixture of a Zr (IV) or Hf (IV) tetrahalide/Al trihalide containing 0.3-0.7 mol of the respective (IV) halide, based on one mole of ferrocene or ferrocene derivative, in conjunction with a metallic reducing agent.

**10.** A process according to claim 9, in which a mixture is used of 0.3-0.7 mol of Zr(IV) or Hf (IV) tetrahalide and 0.8-2.0 mol of Al trihalide, based on one mole of ferrocene or ferrocene derivative, together with finely divided aluminium, and in which halide is bromide or chloride.

**11.** A process according to claim 9, in which a mixture is used of 0.4-0.6 mol of Zr(IV) or Hf (IV) tetrahalide and 1.0-1.8 mol of Al trihalide, together with 0.1-1.0 mol of finely divided aluminium, based on one mole of ferrocene or ferrocene derivative, and in which halide is bromide or chloride.

**12.** A process according to claim 9, wherein the Lewis acid used is a mixture of 0.4-0.6 mol of $ZrCl_4$ or $HfCl_4$ and 1.2-1.4 mol of $AlCl_3$, together with 0.15-0.2 mol of finely divided aluminium, based on one mole of ferrocene or ferrocene derivative.

**13.** A process according to claim 9, wherein the reaction mixture, after completion of the reaction, is deactivated with acidified water or a mixture of ice/water and, after filtration and phase separation, the aqueous phase is extracted with an organic polar solvent.

## Revendications

**1.** Procédé de préparation de composés de formule (I)

$$\left[ R\ Fe\ R^2 \right]_q^{\oplus} X^{q\ominus} \qquad (I),$$

dans laquelle R est un anion de formule $C_5H_4R^1$ ou $C_9H_7$, $R^1$ est un hydrogène, un alkyle en $C_1$-$C_6$ ou un halogène,

$R^2$ représente un arène $\pi$, X est un anion de valence q et q signifie 1,2 ou 3,

par réaction du ferrocène ou d'un de ses dérivés $(C_5H_4R^3)Fe(C_5H_4R^1)$ ou $(C_9H_7)_2Fe$, où $R^3$ possède l'une des significations de $R^1$, avec au moins une mole d'un arène $\pi$ $R^2$, puis éventuellement échange de l'anion $X^{q-}$ de façon connue en soi, la réaction du ferrocène ou de son dérivé étant effectuée en présence de

a) au moins 1,2 mole d'un mélange de trihalogénure d'Al et de tétrahalogénure de Zr-IV ou de Hf-IV, éventuellement en présence d'un agent réducteur métallique, le tétrahalogénure de Zr-IV ou de Hf-IV étant présent en une quantité d'au moins 0,2 mole et le trihalogénure d'Al en une quantité d'au moins 0,1 mole,

ou la réaction du ferrocène ou de son dérivé étant effectuée en présence de

b) au moins 1,0 mole d'un tétrahalogénure de Zr-IV ou de Hf-IV en tant que seul acide de Lewis en combinaison avec au moins 1,0 mole d'un agent réducteur métallique,

les quantités indiquées se rapportant toujours à une mole de ferrocène ou de son dérive.

**2.** Procédé selon la revendication 1, dans lequel R est un anion cyclopentadiényle $C_5H_4R^1$.

**3.** Procédé selon la revendication 1, dans lequel $R^1$ est l'hydrogène.

**4.** Procédé selon la revendication 1, dans lequel l'arène $\pi$ $R^2$ est un hydrocarbure aromatique de 6 à 24 atomes de carbone ou un hydrocarbure hétérocyclique aromatique ayant 3 à 30 atomes de carbone et un à deux hétéroatomes.

**5.** Procédé selon la revendication 1, dans lequel $X^{q-}$ est choisi dans le groupe constitué par $BF_4^-$, $PF_6^-$, $AsF_6^-$ et $SbF_6^-$.

**6.** Procédé selon la revendication 1, dans lequel le tétrachlorure de Zr-IV ou de Hf-IV est $ZrCl_4$ ou $HfCl_4$ et dans lequel le trihalogénure d'Al représente $AlCl_3$, en particulier $AlCl_3$ sublimé.

**7.** Procédé selon la revendication 1, dans lequel la quantité totale d'acide de Lewis dans la variante a) est de 1,2 - 4,0 moles et dans la variante b) de 1,0 - 3,0 moles, rapportée à une mole de ferrocène ou de son dérivé.

**8.** Procédé selon la revendication 1, dans lequel le rapport molaire du tétrahalogénure de Zr-IV ou de Hf-IV au trihalogénure d'Al dans la variante a) est de 1:4 à 4:1.

**9.** Procédé selon la revendication 1 pour la préparation simultanée de composés de formule I et de formule III

$$\left[ R\ Fe\ R^2 \right]_q^{\ominus} X^{q\ominus} \qquad (I),$$

$(R)_2M\backslash(Hal)_2$ (III),

dans lesquelles M représente Zr ou Hf, Hal est un atome d'halogène et R, $R^2$, X et q ont la signification définie dans la revendication 1, caractérisé en ce que l'on utilise un mélange de tétrahalogénure de Zr-IV ou de Hf-IV/trihalogénure d'Al contenant 0,3 - 0,7 mole de l'halogénure-IV correspondant, pour une mole de ferrocène ou de son dérivé, en combinaison avec un agent réducteur métallique.

**10.** Procédé selon la revendication 9, dans lequel on utilise un mélange de 0,3 - 0,7 mole de tétrahalogénure de Zr-IV ou de Hf-IV et de 0,8 - 2,0 mole de trihalogénure d'Al pour une mole de ferrocène ou de son dérivé, avec de l'Al finement divisé, et dans lequel l'halogénure représente un bromure ou un chlorure.

**11.** Procédé selon la revendication 9, dans lequel on utilise un mélange de 0,4 - 0,6 mole de tétrahalogénure de Zr-IV ou de Hf-IV et de 1,0 - 1,8 mole de trihalogénure d'Al, avec 0,1 - 1,0 mole d'Al finement divisé, pour une mole de ferrocène ou de son dérivé, et dans lequel l'halogénure représente un bromure ou un chlorure.

**12.** Procédé selon la revendication 9, dans lequel on utilise comme acide de Lewis un mélange de 0,4 - 0,6 mole de $ZrCl_4$ ou de $HfCl_4$ et de 1,2 - 1,4 mole d'$AlCl_3$, avec 0,15 - 0,2 mole d'Al finement divisé, pour une mole de ferrocène ou de son dérivé.

**13.** Procédé selon la revendication 9, dans lequel on désactive le mélange réactionnel après la fin de la réaction avec de l'eau acidifiée ou un mélange d'eau/glace acidifié et on extrait avec un solvant organique polaire la phase aqueuse obtenue après filtration et séparation de phases.